# EUROPÄISCHE PATENTSCHRIFT

(11) **EP 3 013 879 B1**
(45) Veröffentlichungstag und Bekanntmachung des Hinweises auf die Patenterteilung: **12.07.2017**
(21) Anmeldenummer: 14730462.0
(22) Anmeldetag: 28.05.2014
(51) Int. Cl.: C08G 18/48, C08G 18/66, C08G 18/32, C08G 18/40

(54) **HYDROLYSEBESTÄNDIGE POLYURETHANFORMKÖRPER**
HYDROLYSIS RESISTANT PUR MOLDED PARTS.
PIÈCES MOULÉES DE PUR RÉSISTANTS À L'HYDROLYSE.

(30) Priorität: 28.06.2013 EP 13174414
(43) Veröffentlichungstag der Anmeldung: 04.05.2016
(73) Patentinhaber: BASF SE, 67056 Ludwigshafen am Rhein (DE)
(72) Erfinder: DOROODIAN, Amir, 49074 Osnabrück (DE); HE, Yan, 49448 Lemförde (DE)
(74) Vertreter: BASF IP Association
(86) Internationale Anmeldenummer: PCT/EP2014/061072
(87) Internationale Veröffentlichungsnummer: WO 2014/206679

(56) Entgegenhaltungen:
- EP-A1- 1 344 787
- EP-A2- 0 431 412
- EP-A2- 0 472 080
- WO-A1-03/070801
- WO-A1-2008/112406
- WO-A1-2013/044474
- DE-A1- 19 909 978
- FR-A1- 2 787 796

## Beschreibung

Die vorliegende Erfindung betrifft ein Verfahren zur Herstellung von Polyurethanformkörpern mit einer Dichte von 150 bis 850 g/L bei dem man (a) organische Polyisocyanate mit (b) Verbindungen mit mindestens zwei gegenüber Isocyanat reaktiven Wasserstoffatomen, enthaltend Polyesterol (b1) und mindestens eine Verbindung (b2), erhältlich durch Alkoxylierung von Bisphenol A als Starter mit Propylenoxid (c)Treibmittel, (d) Katalysator, und (e) gegebenenfalls sonstigen Hilfsmittel und/oder Zusatzstoffe zu einer Reaktionsmischung vermischt, in eine Form gibt und zu einem Polyurethanformkörper ausreagieren lässt. Weiter betrifft die vorliegende Erfindung Polyurethanformkörper, erhältlich nach einem solchen Verfahren sowie die Verwendung dieser Formkörper als Lenkrad, Sitz, Armlehne uns insbesondere als Schuhsohle.

Formkörper aus geschäumten Polyurethanen sind bekannt und können für verschiedenste Anwendungen eingesetzt werden. In den meisten Anwendungen werden diese auf Basis von Polyethern oder Polyestern als Polyole hergestellt. Dabei weisen die Polyesterpolyurethane gegenüber den Polyetherpolyurethanen bessere mechanische Eigenschaften auf. Ferner zeigen die PESOL-Polyurethane (polyesterolbasieren Polyurethane) eine verbesserte Quellungsresistenz gegenüber organischen Stoffen wie z.B. iso-Oktan. Diese Quellungsresistenz ist eine wichtige Forderung für Anwendung als Sicherheitsschuh und kann durch Polyetherpolyurethan nicht erfüllt werden. Nachteil der Polyesterpolyurethane ist das diese anfällig für Hydrolyse in feuchtwarmen Umfeld sind. Dabei sind vor allem Schaumstoffe aufgrund ihrer in Vergleich zum Volumen großen Oberfläche betroffen.

Üblicherweise werden zur Herstellung von Polyurethanen auf Basis von Polyesterolen Polyesterole eingesetzt, die durch Polykondensation von C4 bis C6 Dicarbonsäuren mit mehrfunktionellen Alkoholen erhalten werden. Diese Polyurethane haben aber den Nachteil, dass diese nur unzureichende Hydrolysestabilität aufweisen. Zur Verbesserung der Hydrolysestabilität von Polyurethanen auf Basis von Polyesterolen werden beispielsweise diese C4 bis C6-Dicarbonsäuren durch hydrophobere Dicarbonsäuren ersetzt. So beschreibt US 2005124711 microcelluläre Polyesterpolyurethane die aus Polyesterolen, die ausgehend von dimeren Fettsäuren erhalten werden.

US 2011/0190406 beschreibt den Einsatz von Bisphenol A als Diol für die Herstellung von Polyesterolen und deren Einsatz bei der Herstellung von Schuhsohlen, die Hydrolyseeigenschaften der Schuhsohlen werden aber nicht diskutiert.

WO 2004/050735 beschreibt die Verwendung von Polyesterolen auf Basis von einer Kombination einer ortho Phthalsäure und einer Dicarbonsäure mit 8-12 Kohlenstoffatomen zur Verbesserung der Hydrolysestabilität. WO 03/070801 A1 offenbart Polyurethan-Schaumstoffen mit einer Dichte von 250 bis 700 g/L (Anspruch 8), die zur Herstellung von Schuhsohlen verwendet werden (Seite 1, Zeilen 5-6) und die eine sehr gute Hydrolysebeständigkeit aufweisen (Seite 9, Zeilen 14-21). Ein Nachteil dieser Polyester mit verbesserter Hydrolysestabilität ist, dass eingesetzten Rohstoffe teuer sind. Weiter werden die mechanischen Eigenschaften gegenüber Polyurethanen auf Basis klassischer Polyesterole, die durch Polykondensation von C4 bis C6 Dicarbonsäuren mit mehrfunktionellen Alkoholen erhalten werden, schlechter. Schließlich nimmt bei Ersatz der klassischen Polyesterole durch Lösungen gemäß US 2005124711 oder WO 2004/050735 durch deren geringere Polarität die iso-Oktan Quellung zu, wodurch diese Lösungen nur bedingt zur Herstellung von Sicherheitsschuhen geeignet sind.

Aufgabe der vorliegenden Erfindung war es, elastomere Polyurethanformkörper, insbesondere elastomere Polyurethanintegralschaumstoffe, auf Basis von Polyesterolen zu liefern, die eine verbesserte Hydrolysestabilität und hervorragende mechanische Eigenschaften aufweisen, die sich insbesondere als Sohlenmaterial für Sicherheitsschuhe eignen.

Die erfindungsgemäßen Aufgabe konnte gelöst werden durch einen elastomeren Polyurethanformkörper mit einer Dichte von 150 bis 850 g/L, herstellbar nach einem Verfahren, bei dem man (a) organische Polyisocyanate mit (b) Verbindungen mit mindestens zwei gegenüber Isocyanat reaktiven Wasserstoffatomen, enthaltend Polyesterol (b1) und mindestens eine Verbindung (b2), erhältlich durch Alkoxylierung von Bisphenol A als Starter mit Propylenoxid (c)Treibmittel, (d) Katalysator, und (e) gegebenenfalls sonstigen Hilfsmittel und/oder Zusatzstoffe zu einer Reaktionsmischung vermischt, in eine Form gibt und zu einem Polyurethanformkörper ausreagieren lässt.

Dabei handelt es sich bei den erfindungsgemäßen Polyurethanformkörpern um elastomere Polyurethanschaumstoffe, vorzugsweise Polyurethanintegralschaumstoffe. Unter einen elastomeren Polyurethanschaumstoff sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 5 % ihrer Ausgangsdicke aufweisen. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei zwischen 150 g/L und 850 g/L bevorzugt von 180 g/L bis 750 g/L, besonders bevorzugt 200 g/L bis 650 g/L.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind monomeres Metandiphenyldiisocyanat (MMDI), wie 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Verbindungen mit mindestens zwei gegenüber Isocyanat reaktiven Wasserstoffatomen (a-2), zum Prepolymer umgesetzt werden.

Solche Verbindungen mit mindestens zwei gegenüber Isocyanat reaktiven Wasserstoffatomen (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei die unter b) beschriebenen Polyesterole eingesetzt.

Die Polyole (b) enthalten Polyesterole (b1) und mindestens eine Verbindung (b2), erhältlich durch Alkoxylierung eines aromatischen Startermoleküls. Als Polyesterole werden Polyesterole mit mindestens zwei gegen Isocyanatgruppen reaktiven Wasserstoffatomen eingesetzt. Vorzugsweise weisen Polyesterole ein zahlenmittleres Molekulargewicht von größer 450 g/mol, besonders bevorzugt von größer 500 bis kleiner 8.000 g/mol und insbesondere von 600 bis 3.500 g/mol und eine Funktionalität von 2 bis 4, insbesondere von 2 bis 3, auf.

Polyesterpolyole (b1) können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole (b1) können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1:1,05 bis 1,2 polykondensiert.

Als Polyesterole (b1) eignen sich ferner polymermodifizierte Polyesterole, vorzugsweise Pfropf-Polyesterole. Hierbei handelt es sich um ein sogenanntes Polymerpolyesterol, welches üblicherweise einen Gehalt an, bevorzugt thermoplastischen, Polymeren von 5 bis 60 Gew.-%, bevorzugt 10 bis 55 Gew.-%, besonders bevorzugt 15 bis 50 Gew.-% und insbesondere 20 bis 40 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyesterol enthält neben dem Pfropfcopolymerisaten überwiegend die Homopolymere der Olefine, dispergiert in unverändertem Polyesterol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- und einem Polyacrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyesterol enthalten, liegt dies vorzugsweise zusammen mit weiteren Polyesterolen vor. Besonders bevorzugt ist der Anteil an Polymerpolyol größer als 5 Gew.-%, bezogen auf das Gesamtgewicht der Komponente (b). Die Polymerpolyesterole können beispielsweise, bezogen auf das Gesamtgewicht der Komponente (b), in einer Menge von 7 bis 90 Gew.-%, oder von 11 bis 80 Gew.-% enthalten sein.

Neben Polyesterolen (b1) werden Verbindung (b2), erhältlich durch Alkoxylierung eines aromatischen Startermoleküls, eingesetzt. Je nach Kettenlänge kann diese unter die Definition der polymeren Verbindungen mit mindestens zwei gegenüber Isocyanaten reaktiven Wasserstoffatomen oder der Kettenverlängerer und gegebenenfalls der Vernetzungsmittel fallen. Als aromatisches Startermolekül geeignet sind dabei beispielsweise Phenylendiamin, 2,3-, 2,4- und 2,6-Toluylendiamin (TDA), 4,4'-, 2,4'- und 2,2'-Diaminodiphenylmethan (MDA), polymerisches MDA, und Bisphenole.

Vorzugsweise weist das aromatische Startermolekül mindestens zwei Benzolringe auf und ist besonders bevorzugt ein Bisphenol oder ein Derivat eines Bisphenols. Dabei sind im Sinn der Erfindung unter Derivaten Verbindungen zu verstehen, bei denen Wasserstoffatome an aromatischen oder an aliphatischen C-Atomen durch Halogenatome oder Kohlenwasserstoffreste, wie Alkyl- oder Arylreste ersetzt werden. Diese Kohlenwasserstoffreste können unsubstituiert oder substituiert, beispielsweise durch Halogenatome, Sauerstoff, Schwefel oder Phosphor sein. Diese können einzeln oder in Form von Mischungen eingesetzt werden.

Bisphenole umfassen Bisphenol A, Bisphenol AF, Bisphenol AP, Bisphenol BP, Bisphenol C, Bisphenol E, Bisphenol F, Bisphenol FL, Bisphenol G, Bisphenol M, Bisphenol P, Bisphenol PH, Bisphenol S, Bisphenol TMC und Bisphenol Z. Besonders bevorzugt werden Bisphenol A und/oder Bisphenol S und insbesondere Bisphenol A als aromatisches Startermolekül eingesetzt.

Die Verbindungen (b2) werden durch Alkoxylierung von Bisphenol A als Starter mit Propylenoxid. Beispielsweise können sie durch anionische Polymerisation von Bisphenol A mit Propylenoxid unter Einsatz von Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren erhalten werden.

Erfindungsgemäße Verbindungen (b2), erhältlich durch Alkoxylierung von Bisphenol A als Starter mit Propylenoxid, weisen vorzugsweise eine Hydroxylzahl von 80 bis 400 mg KOH/g, besonders bevorzugt 100 bis 320 mg KOH/g und insbesondere 120 bis 250 mg KOH/g auf. Alkoxylierungsprodukte von Bisphenol A als Starter mit Propylenoxyd werden unter dem Handelsnamen SynFac® von Milliken Chemical vertreiben. Dabei beträgt der Anteil der Komponente (b2), bezogen auf das Gesamtgewicht der Komponente (b), vorzugsweise 0,01 bis 10 Gew.-%, besonders bevorzugt 0,1 bis 6 Gew.-% und insbesondere 0,5 bis 4 Gew.-%.

Neben Polyesterolen (b1) und Verbindung (b2), erhältlich durch Alkoxylierung von Bisphenol A als Starter mit Propylenoxid, können auch weitere, in der Polyurethanchemie übliche Polyole mit einem zahlenmittleren Molekulargewicht von größer 500 g/mol, beispielsweise Polyetherole, eingesetzt werden. Dabei beträgt aber der Anteil der weiteren Polyole vorzugsweise weniger als 40 Gew.-%, besonders bevorzugt weniger als 20 Gew.-%, ganz besonders bevorzugt weniger als 10 Gew.-% weiter bevorzugt weniger als 5 Gew.-% und insbesondere 0 Gew.-%, bezogen auf das Gesamtgewicht an Polyesterolen (b) und den weiteren Polyolen.

Weiter können die Verbindungen mit mindestens 2 gegenüber Isocyanat reaktiven Wasserstoffatomen sogenannte Kettenverlängerungsmittel und/oder Vernetzungsmittel enthalten. Als Kettenverlängerungsmittel und/oder Vernetzungsmitte werden Substanzen mit einem Molekulargewicht von vorzugsweise kleiner 450 g/mol, besonders bevorzugt von 60 bis 400 g/mol verstanden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (f) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponente b), zum Einsatz.

Ferner sind bei der Herstellung von Polyurethanschaumstoffformkörpern Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%,, bezogen auf das Gesamtgewicht der Komponenten (a) bis (e).

In einer weiteren bevorzugten Ausführungsform werden der Umsetzung der Komponenten (a) bis (e) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten b), c) und f) zugesetzt.

Als Katalysatoren (d) zur Herstellung der Polyurethanschaumstoffe werden bevorzugt Verbindungen verwendet, welche die Reaktion der Verbindungen mit mindestens zwei gegenüber Isocyanaten reaktiven Wasserstoffatomen (b) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Vorzugsweise werden als Katalysatoren (d) ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (e) zugegeben werden. Genannt seien beispielsweise Trennmittel, Füllstoffe, Farbstoffe, Pigmente, Hydrolyseschutzmittel, geruchsabsorbierende Substanzen und fungistatische und/oder bakteriostatisch wirkende Substanzen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (e), zugegeben.

Die Hydrolysestabilität von Polyesterpolyurethane kann durch die Zugabe von Additiven, wie Carbodiimiden, deutlich verbessert werden. Solche Materialien sind kommerziell unter Handelsnamen wie z.B. Elastostab™ oder Stabaxol™ erhältlich.

In dem erfindungsgemäßen Verfahren werden die Ausgangskomponente (a) bis (e) in solchen Mengen miteinander vermischt, dass das Äquivalenzverhältnis von NCO-Gruppen der Polyisocyanate (a) zur Summe der reaktiven Wasserstoffatome der Komponenten (b) und (c) 1 : 0,8 bis 1 : 1,25, vorzugsweise 1 : 0,9 bis 1 : 1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Gegenstand der vorliegenden Erfindung ist weiterhin ein Polyurethanformkörper, erhältlich nach dem erfindungsgemäßen Verfahren.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Die Ausgangskomponenten (a) bis (e) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoff eine Dichte von vorzugsweise 150 g/L bis 850 g/L bevorzugt von 180 g/L bis 600 g/L, besonders bevorzugt 200 g/L bis 500 g/L und insbesondere 220 bis 400 g/L aufweisen Die Verdichtungsgrade zur Herstellung der erfindungsgemäßen Polyurethanintegralschaumstoffe liegen im Bereich von 1,1 bis 8,5, vorzugsweise von 1,6 bis 7,0.

Die erfindungsgemäßen Polyurethanformkörper werden vorzugsweise als Schuhsohle und besonders bevorzugt als (Zwischen-)Sohle, zum Beispiel für Straßenschuhe, Sportschuhe, Sandalen und Stiefel eingesetzt. Insbesondere werden die erfindungsgemäßen Polyurethanintegralschaumstoffe als Zwischensohle für Sportschuhe oder als Sohlenmaterial hochhackige Damenschuhe eingesetzt. Weiter können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze.

Im Folgenden soll die Erfindung anhand von Beispielen verdeutlicht werden.

### Beispiele

Folgende Verbindungen wurden eingesetzt:
- Iso1:: Isocyanat-Prepolymer auf Basis von 4.4'-MDI und ca. 10 Gew.-%, bezogen auf das Gesamtgewicht der zur Prepolymerherstellung eingesetzten Isocyanatecarbodiimidmodifiziertes und einem Gemisch von Polyesterolen mit einer gemittelten Funktionalität von 2,21 und einer OHZ von 38 mg KOH/g auf Basis von Adipinsäure, Monoethylenglycol, Diethylenglycol und Glycerinund Diisotridecylphtalat als Zusatzmittel mit einem Isocyanatgehalt von 16,5 Gew.-%
- Iso2:: Isocyanat-Prepolymer mit einem Isocyanatgehalt von 18,9 Gew.-% auf Basis von 4.4'-MDI und ca. 10 Gew.-%, bezogen auf das Gesamtgewicht der zur Prepolymerherstellung eingesetzten Isocyanate, carbodiimidmodifiziertem MDI und Polyesterol mit einer Funktionalität von 2,0 und einer OHZ von 56 mg KOH/g, erhältlich durch Polykondensation von Adipinsäure, MEG und Butandiolitte ergänzen.
- Polyol1:: Polyesterol auf Basis von Adipinsäure, Monoethylenglycol, Diethylenglykol und Glycerin mit einer OH-Zahl von 56 mg KOH/g
- Polyol2:: Polyethyleneglykol mit einer OH-Zahl von 375 mg KOH/g
- KV 1:: Monoethylenglycol
- KV 2:: 1,4-di-(betahydroxypropyl)-bisphenol A
- KV3:: 1-(betahydroxyethyl)-4-((2-hydroxyethoxy)ethyl) bisphenol A (Pluriol® BP 30 E)
- Kat1:: Triethylendiamin in Monoethylenglykol (33 Gew.-%)
- Zusatz1:: 10,10'-OXYBISPHENOXYARSIN
- Zusatz 2:: TRI 2-CHLORISOPROPYLPHOSPHAT
- Zusatz 3:: quarternäres Amoniumethosulfat (20 Gew.-%) in Monoethylenglycol
- Zusatz 4:: Polysiloxan
- Zusatz 5:: Ethoxyliertes Glycerin, OH-Zahl 270 mg KOH/g

Gemäß Tabelle 1 wurden die Einsatzstoffe vermischt und in eine geschlossene Form mit den Abmessungen 20cm x 20 cm x 1 cm gegeben. Alle Mengenangaben in Tabelle 1 zu den Ausgangssubstanzen sind Gewichtsteile. Der Isocyanatindex beträgt in allen Beispielen und Vergleichsbeispielen 100. Die erhaltenen Prüfplatten wurden 2 Tage bei unter Normklima konditioniert, bevor die mechanische Charakterisierung erfolgte. Dabei wurde die Härte, die Rückprallelastizität nach DIN 53512, die Weiterreißfestigkeit nach DIN ISO 34-1,A, die Zugfestigkeit nach DIN 53504 und die Bruchdehnung nach DIN 53543 bestimmt. Zur Bestimmung der Hydrolyseeigenschaften wurden die Probekörper gemäß DIN 53543bei 70°C und 95% relativer Luftfeuchte gelagert und die Zugfestigkeit bzw. die Bruchdehnung der Probe nach 7, 14, 21 bzw. 28 Tagen Hydrolysealterung gemessen. Die Ergebnisse dieser Messungen sind ebenfalls in Tabelle 1 angegeben.

**Tabelle 1**

| | Vergleich 1 | Beispiel 1 | Vergleich 2 | Beispiel 2 | Vergleich 3 |
|---|---|---|---|---|---|
| Polyol 1 | 88,40 | 88,40 | 86,83 | 86,83 | 86,83 |
| Polyol 2 | 2,00 | 2,00 | 0,00 | 0,00 | 0,00 |
| KV 1 | 4,00 | 4,00 | 8,88 | 8,88 | 8,88 |
| KV 2 | 0,00 | 2,00 | 0,00 | 2,00 | 0,00 |
| KV3 | | | | | 2,00 |
| Kat 1 | 1,6 | 1,6 | 1,00 | 1,00 | 1,00 |
| Zusatz1 | 0,93 | 0,93 | | | |
| Zusatz2 | 4,42 | 4,42 | | | |
| Zusatz3 | 1,04 | 1,04 | | | |
| Zusatz4 | 0,75 | 0,75 | 0,40 | 0,40 | 0,40 |
| Zusatz5 | 2 | 2 | 2,49 | 2,49 | 2,49 |
| Wasser | 0,45 | 0,45 | 0,4 | 0,4 | 0,4 |
| | | | | | |

| Iso | Iso 1 | Iso 1 | Iso 2 | Iso 2 | Iso 2 |
|---|---|---|---|---|---|
| | | | | | |
| Massenverhältnis | 100:81,7 | 100:83 | 100:96 | 100:96,5 | 100:96,3 |
| | | | | | |
| Eigenschaften: | | | | | |
| Dichte (g/L) | 500 | 500 | 500 | 500 | 500 |
| Härte (Shore A) | 21 | 21 | 60 | 60 | 60 |
| Rückprallelastizität (%) | 43 | 41 | 46 | 42 | 40 |
| Weiterreißfestigkeit (N/mm) | 3,6 | 2,9 | 11,9 | 12,3 | 12 |
| Zugfestigkeit (N/mm²) | 4,3 | 3,8 | 6,6 | 5,4 | 6,4 |
| Bruchdehnung (%) | 471 | 445 | 370 | 372 | 423 |
| Zugfestigkeit 7 d | | | 5,9 | 5,2 | 4,1 |
| Zugfestigkeit 14 d | 2,6 | 3,5 | | | 1,2 |
| Zugfestigkeit 21 d | | | 1,1 | 3,0 | 0,00 |
| Zugfestigkeit 28 d | | | 0,6 | 1,4 | 0,00 |
| Bruchdehnung 7 d | 486 | 496 | 432 | 413 | |
| Bruchdehnung 14 d | 527 | 505 | | | |
| Bruchdehnung 21 d | | | 84 | 345 | 414 |
| Bruchdehnung 28 d | | | 33 | 116 | 104 |

Anhand der Beispiele kann gezeigt werden, dass die Zugabe von Bisphenol-A-basiertem Polyol bei Beibehaltung guter mechanischer Eigenschaften die Hydrolysealterung gebremst werden kann.

## Patentansprüche

1. Verfahren zur Herstellung von Polyurethanformkörpern mit einer Dichte von 150 bis 850 g/L bei dem man
a) organische Polyisocyanate mit
b) Verbindungen mit mindestens zwei gegenüber Isocyanat reaktiven Wasserstoffatomen, enthaltend Polyesterol (b1) und mindestens eine Verbindung (b2), erhältlich durch Alkoxylierung von Bisphenol A als Starter mit Propylenoxid,
c) Treibmittel,
d) Katalysator, und
e) gegebenenfalls sonstigen Hilfsmittel und/oder Zusatzstoffe
zu einer Reaktionsmischung vermischt, in eine Form gibt und zu einem Polyurethanformkörper ausreagieren lässt.

2. Verfahren nach Anspruch 1, **dadurch gekennzeichnet, dass** Verbindung (b2), eine Hydroxylzahl von 80 bis 400 mg KOH/g aufweist.

3. Verfahren nach einem der Ansprüche 1 oder 2, **dadurch gekennzeichnet, dass** Polyesterol (b1) durch Kondensation von Dicarbonsäuren mit 4 bis 10 C-Atomen mit einem difunktionellen und/oder trifunktionellen, aliphatischen Alkohol erhältlich ist.

4. Verfahren nach einem der Ansprüche 1 bis 3, **dadurch gekennzeichnet, dass** die Komponente (b) neben den Komponenten (b1) und (b2) weniger als 10 Gew.-% weitere Polyole enthält.

5. Polyurethanformkörper, erhältlich nach einem Verfahren gemäß einem der Ansprüche 1 bis 4.

6. Polyurethanformkörper nach Anspruch 5, **dadurch gekennzeichnet, dass** der Polyurethanformkörper eine Schuhsohle ist.

7. Verwendung eines Polyurethanformkörpers gemäß Anspruch 5 als Schuhsohle.

## Claims

1. A process for producing polyurethane moldings having a density of from 150 to 850 g/l, wherein
a) organic polyisocyanates are mixed with
b) compounds having at least two hydrogen atoms which are reactive toward isocyanate and comprising polyesterol (b1) and at least one compound (b2) obtainable by alkoxylation of bisphenol A as starter with propylene oxide,
c) blowing agent,
d) catalyst, and
e) optionally other auxiliaries and/or additives
to form a reaction mixture and the reaction mixture is introduced into a mold and allowed to react to give a polyurethane molding.

2. The process according to claim 1, wherein compound (b2) has a hydroxyl number of from 80 to 400 mg KOH/g.

3. The process according to either of claims 1 and 2, wherein polyesterol (b1) can be obtained by condensation of dicarboxylic acids having from 4 to 10 carbon atoms with a bifunctional and/or trifunctional, aliphatic alcohol.

4. The process according to any of claims 1 to 3, wherein component (b) comprises, apart from components (b1) and (b2), less than 10% by weight of further polyols.

5. A polyurethane molding obtainable by a process according to any of claims 1 to 4.

6. The polyurethane molding according to claim 5, wherein the polyurethane molding is a shoe sole.

7. The use of a polyurethane molding according to claim 5 as shoe sole.

## Revendications

1. Procédé de fabrication de corps moulés de polyuréthane ayant une densité de 150 à 850 g/l, selon lequel
a) des polyisocyanates organiques sont mélangés avec
b) des composés contenant au moins deux atomes d'hydrogène réactifs avec les isocyanates, contenant un polyestérol (b1) et au moins un composé (b2), pouvant être obtenu par alcoxylation de bisphénol A en tant que produit de départ avec de l'oxyde de propylène,
c) un agent gonflant,
d) un catalyseur et
e) éventuellement d'autres adjuvants et/ou additifs,
pour former un mélange réactionnel, qui est introduit dans un moule et laissé réagir pour former un corps moulé de polyuréthane.

2. Procédé selon la revendication 1, **caractérisé en ce que** le composé (b2) présente un indice hydroxyle de 80 à 400 mg KOH/g.

3. Procédé selon l'une quelconque des revendications 1 ou 2, **caractérisé en ce que** le polyestérol (b1) peut être obtenu par condensation d'acides dicarboxyliques de 4 à 10 atomes C avec un alcool aliphatique bifonctionnel et/ou trifonctionnel.

4. Procédé selon l'une quelconque des revendications 1 à 3, **caractérisé en ce que** le composant (b) contient moins de 10 % en poids d'autres polyols en plus des composants (b1) et (b2).

5. Corps moulé de polyuréthane, pouvant être obtenu par un procédé selon l'une quelconque des revendications 1 à 4.

6. Corps moulé de polyuréthane selon la revendication 5, **caractérisé en ce que** le corps moulé de polyuréthane est une semelle de chaussure.

7. Utilisation d'un corps moulé de polyuréthane selon la revendication 5 en tant que semelle de chaussure.
